# EUROPEAN PATENT APPLICATION

(11) **EP 4 560 211 A1**
(43) Date of publication of application: **28.05.2025**
(21) Application number: 24200298.8
(22) Date of filing: 13.09.2024
(51) Int. Cl.: F24F 3/167, F24F 8/10, F24F 11/58, F24F 11/64, F24F 11/77, F24F 110/50, F24F 110/64, F24F 110/65, F24F 110/66, F24F 110/70, F24F 110/72

(54) **INDOOR AIR CLEANING SYSTEM WITH DISCONNECTION DETECTING AND PREVENTING MECHANISM**

(30) Priority: 21.11.2023 TW 112145031
(71) Applicant: Microjet Technology Co., Ltd., Hsinchu (TW)
(72) Inventor: Mou, Hao-Jan, Hsinchu (TW); Wu, Chin-Chuan, Hsinchu (TW); Chen, Chih-Kai, Hsinchu (TW); Kuo, Yu-Chun, Hsinchu (TW); Huang, Chi-Feng, Hsinchu (TW)
(74) Representative: Uexküll & Stolberg

(57) **Abstract**

An indoor air cleaning system with disconnection detecting and preventing mechanism includes a gas filtration device (D) and a cloud computing server (2). The gas filtration device (D) is disposed in an indoor field (A) and including a fan (D1), a filter element (D2), a gas detector (1) and a driving control element (D3). The gas detector (1) detects air pollution, outputs air pollution information. The cloud computing server (2) receives the air pollution information via IOT communication, stores the air pollution information to form a big data database, performs an intelligence computing for comparison based on the big data database, and issues a control command to enable the fan (D1). When IOT communication is judged as disconnected, the gas detector (1) autonomously computes and compares the air pollution information and issues the control command to enable the fan (D1), thereby reaching a gas state of the indoor field (A) to a cleanroom class with a level of air pollution close to zero.

## Description

### FIELD OF THE INVENTION

The present disclosure relates to an indoor air cleaning system, and more particularly to an indoor air cleaning system with disconnection detecting and preventing mechanism.

### BACKGROUND OF THE INVENTION

Suspended particles are solid particles or droplets contained in the air. Due to their extremely fine size, the suspended particles may enter the lungs of human body through the nasal hairs in the nasal cavity easily, causing inflammation in the lungs, asthma or cardiovascular disease. If other pollutant compounds are attached to the suspended particles, it will further increase the harm to the respiratory system. In recent years, the problem of air pollution is getting worse. In particular, the concentration of particle matters (e.g., PM2.5) is often too high. Therefore, the monitoring to the concentration of the gas suspended particles is taken more and more seriously. However, the gas flows unstably due to variable wind direction and air volume, and the general gas-quality monitoring station is located in a fixed place. Under this circumstance, it is impossible for people to check the concentration of suspended particles in current environment.

Furthermore, in recent years, modern people are placing increasing importance on the quality of the air in their surroundings. For example, carbon monoxide, carbon dioxide, volatile organic compounds (VOC), PM2.5, nitric oxide, sulfur monoxide and even the suspended particles contained in the air are exposed in the environment to affect the human health, and even endanger the life seriously. Therefore, the quality of environmental air has attracted the attention in various countries. At present, how to detect the air quality and avoid the harm is a crucial issue that urgently needs to be solved.

In order to confirm the quality of the air, it is feasible to use a gas sensor to detect the air in the surrounding environment. If the detection information can be provided in real time to warn people in the environment, it is helpful of avoiding the harm and facilitates people to escape the hazard immediately, thereby preventing the hazardous gas exposed in the environment from affecting the human health and causing the harm. Therefore, it is considered a valuable application to use a gas sensor to detect the air in the surrounding environment.

In addition, it is not easy to control the indoor air quality. Besides the outdoor air quality, indoor air-conditioning conditions and pollution sources are the major factors affecting the indoor air quality. It is necessary to intelligently and rapidly detect indoor air pollution sources in various indoor fields, effectively remove the indoor air pollution to form a clean and safe breathing gas state, and monitor the indoor air quality in real time anytime, anywhere. Certainly, if the concentration of the suspended particles in the indoor field is strictly controlled according to the "clean room" standard, it allows of avoiding the introduction, generation and retention of suspended particles, and the temperature and humidity in the indoor field can be controlled within the required range. That is to say, through classifying the indoor field by the number of suspended particles in the air, the indoor field can meet the clean room requirements for safe breathing.

Currently, the air pollution detection of the indoor air cleaning system is as followed. The gas detector detects and outputs air pollution information via Internet of Things (IOT) communication, the cloud computing server receives the air pollution information of outdoor field and indoor field via IOT communication, stores the air pollution information to form a big data database of air pollution data, performs an intelligence computing for comparison based on the air pollution data in the big data database, and intelligently selects and issues a control command to enable the fan of the filtration device to generate a directional circulation airflow for rapidly guiding the air pollution to pass through the filter element multiple times for filtration, thereby reaching a gas state of the indoor field to a cleanroom class by a cleanliness specification based on the number of suspended particles. However, since the air pollution information outputted by the air pollution detection is transmitted via ITO communication, if ITO communication is disconnected, the guiding and filtration functions of the filtration device might be influenced. Therefore, how to respond to the disconnection of ITO communication is a main subject developed in the present disclosure.

### SUMMARY OF THE INVENTION

The major object of the present disclosure is to provide an indoor air cleaning system with disconnection detecting and preventing mechanism. In this system, each gas filtration device in an indoor field is equipped with a gas detector for detecting air pollution, outputting air pollution information, and receiving and transmitting a control command to a driving control element, which is electrically connected to the gas filtration device, and the driving control element controls the enablement of the gas filtration device. Moreover, the outputting of the air pollution information by the gas detector is achieved via IOT communication, which includes dual ways, the wired communication and the wireless communication, and through handshaking processes and autonomous judging, one of the wired communication and the wireless communication which functions normally is selected to perform the transmission of the detected air pollution information to a cloud computing server. Then, the cloud computing server generates and feedbacks the control command to the gas detector for transmitting to the driving control element electrically connected therewith so as to control the enablement of the gas filtration device. Whereby, a mechanism for detecting and preventing disconnection of IOT communication is achieved. On the other hand, if both the wired communication and the wireless communication are disconnected when the gas detector outputs the air pollution information, the gas detector autonomously computes and compares the air pollution information, and autonomously issues a control command to the driving control element of the gas filtration device to enable and control the fan for guiding the air pollution to pass through a filter element, thereby reaching a gas state of the indoor field to a cleanroom class with a level of air pollution close to zero.

In a broader aspect of the present disclosure, an indoor air cleaning system with disconnection detecting and preventing mechanism is provided. The system includes at least one gas filtration device disposed in an indoor field and including a fan, a filter element, a gas detector and a driving control element, wherein the gas detector detects an air pollution, outputs air pollution information via Internet of Things (IOT) communication, and receives and transmits a control command via IOT communication to the driving control element for enabling and controlling the fan to guide the air pollution to pass through the filter element; and a cloud computing server receiving the air pollution information detected and outputted by the gas detector via IOT communication, storing the air pollution information to form a big data database of air pollution data, performing an intelligence computing for comparison based on the air pollution data in the big data database, and intelligently selecting and issuing the control command via IOT communication to the gas detector of the least one gas filtration device and then to the driving control element for enabling the fan, wherein when IOT communication is judged as disconnected in a handshaking process, the gas detector autonomously computes and compares the air pollution information detected thereby, and issues the control command to the driving control element to enable and control the fan for guiding the air pollution to pass through the filter element, thereby reaching a gas state of the indoor field to a cleanroom class with a level of air pollution close to zero.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1A is a schematic view illustrating an indoor air cleaning system implemented in an indoor field according to an embodiment of the present disclosure;
FIG. 1B is another schematic view illustrating the indoor air cleaning system implemented in an indoor field according to an embodiment of the present disclosure;
FIG. 1C is a schematic view illustrating the indoor air cleaning system implemented in a kitchen unit in an indoor field according to an embodiment of the present disclosure;
FIG. 2A is a schematic view illustrating the combination of a fan and a filter element of an gas filtration device according to the embodiment of the present disclosure;
FIG. 2B is a schematic view illustrating the combination of filter elements of the gas filtration device according to the embodiment of the present disclosure;
FIG. 3A is a schematic perspective view illustrating a gas detector according to the embodiment of the present disclosure;
FIG. 3B is a schematic perspective view illustrating the gas detector according to the embodiment of the present disclosure from another angle;
FIG. 3C is a schematic perspective view illustrating a gas detection module installed inside the gas detector according to the embodiment of the present disclosure;
FIG. 4A is a schematic perspective view (1) illustrating a gas detection main part according to the embodiment of the present disclosure;
FIG. 4B is a schematic perspective view (2) illustrating the gas detection main part according to the embodiment of the present disclosure;
FIG. 4C is an exploded view illustrating the gas detection main part according to the embodiment of the present disclosure;
FIG. 5A is a schematic perspective view (1) illustrating a base according to the embodiment of the present disclosure;
FIG. 5B is a schematic perspective view (2) illustrating the base according to the embodiment of the present disclosure;
FIG. 6 is a schematic view (3) illustrating the base according to the embodiment of the present disclosure;
FIG. 7A is a schematic exploded view illustrating the combination of a piezoelectric actuator and the base according to the embodiment of the present disclosure;
FIG. 7B is a schematic perspective view illustrating the combination of the piezoelectric actuator and the base according to the embodiment of the present disclosure;
FIG. 8A is a schematic exploded view (1) illustrating the piezoelectric actuator according to the embodiment of the present disclosure;
FIG. 8B is a schematic exploded view (2) illustrating the piezoelectric actuator according to the embodiment of the present disclosure;
FIG. 9A is a schematic cross-sectional view (1) illustrating an action of the piezoelectric actuator according to the embodiment of the present disclosure;
FIG. 9B is a schematic cross-sectional view (2) illustrating an action of the piezoelectric actuator according to the embodiment of the present disclosure;
FIG. 9C is a schematic cross-sectional view (3) illustrating an action of the piezoelectric actuator according to the embodiment of the present disclosure;
FIG. 10A is a schematic cross-sectional view (1) illustrating the gas detection main part according to the embodiment of the present disclosure;
FIG. 10B is a schematic cross-sectional view (2) illustrating the gas detection main part according to the embodiment of the present disclosure;
FIG. 10C is a schematic cross-sectional view (3) illustrating the gas detection main part according to the embodiment of the present disclosure;
FIG. 11 is a block diagram illustrating the communication of the gas detector according to the embodiment of the present disclosure;
FIG. 12 is a block diagram showing the architecture of a cloud computing server according to the embodiment of the present disclosure; and
FIG. 13 is a table showing classifications of gas state in indoor filed by cleanliness specifications based on a number of suspended particles having diameters smaller than 2.5 µm.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

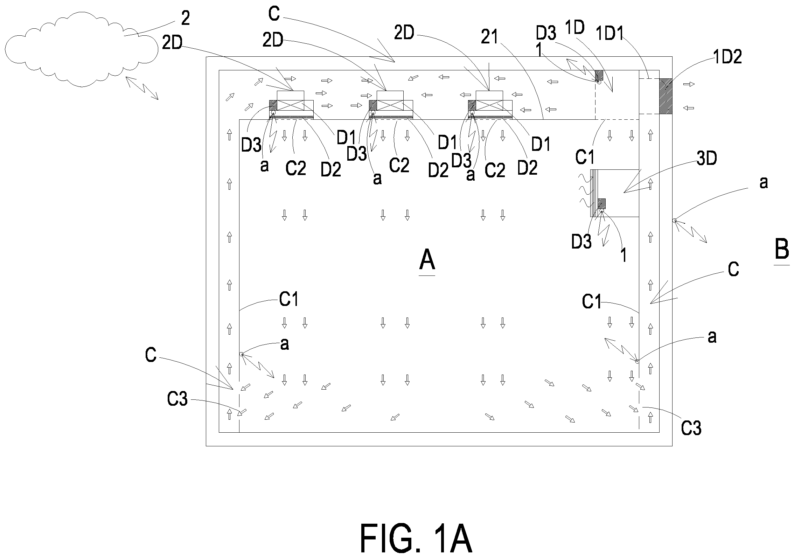

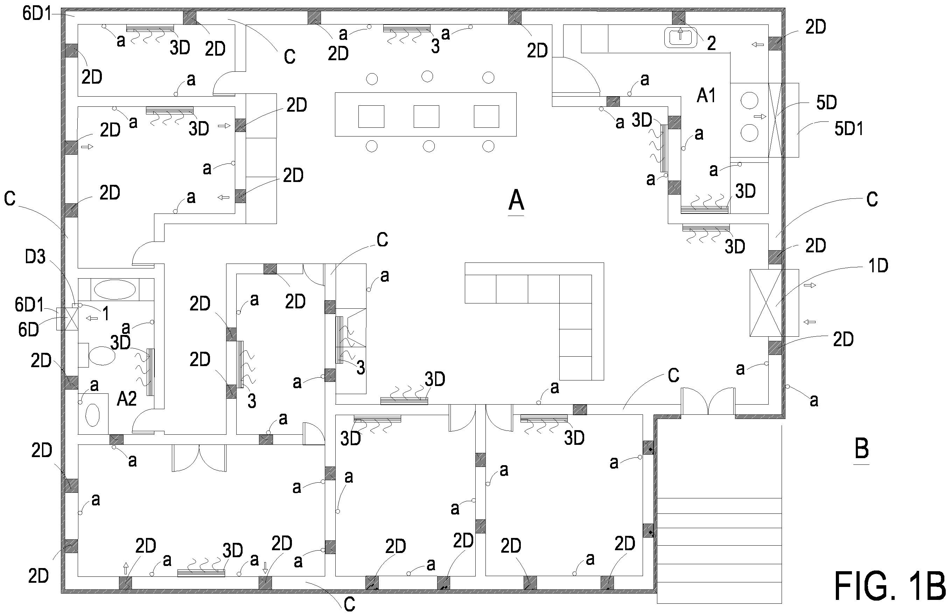

Please refer to FIG. 1A and FIG. 1B which are schematic views illustrating an indoor air cleaning system of the present disclosure being used in indoor fields. Based on this, for responding to a disconnection of Internet of Things (IOT) communication, an indoor air cleaning system with disconnection detecting and preventing mechanism is provided which includes at least one gas filtration device D and a cloud computing server 2.

The at least one gas filtration device D is disposed in an indoor field A and includes a fan D1, a filter element D2, a gas detector 1 and a driving control element D3. The gas detector 1 detects air pollution and output air pollution information via IOT communication. The gas detector 1 further receives a control command via IOT communication and transmits the control command to the driving control element D3 for controlling the enablement of the fan D1, and the fan D1 is enabled to guide the air pollution to pass through the filter element D2 for filtration. Notably, in the embodiment, the air pollution includes at least one selected from the group consisting of particulate matter, carbon monoxide, carbon dioxide, ozone, sulfur dioxide, nitrogen dioxide, lead, total volatile organic compounds (TVOC), formaldehyde, bacteria, fungi, virus and a combination thereof.

The cloud computing server 2 receives the air pollution information detected by the gas detector 1 via IOT communication, stores the air pollution information to form a big data database of air pollution data, performs an intelligence computing for comparison based on the air pollution data in the big data database, and intelligently selects and issues the control command to the gas detector 1 of the gas filtration device D. The control command is then transmitted to the driving control element D3 for enabling and controlling the fan D1 to guide the air pollution to pass through the filter element D2, thereby reaching a gas state of the indoor field A to a cleanroom class with a level of air pollution close to zero. Notably, Internet of Things (IOT) communication refers to a network of interrelated devices that connect and exchange data with other IOT devices and the cloud.

In the embodiment, IOT communication includes a wired communication for the cloud computing server 2 to communicate in wired manner. The cloud computing server 2 receives the air pollution information, performs an intelligence computing, and intelligently selects and issues the control command to the gas detector 1 for further transmitting to the driving control element D3 so as to enable and control the fan D1 to guide the air pollution to pass through the filter element D2, thereby reaching a gas state of the indoor field A to a cleanroom class with a level of air pollution close to zero.

In the embodiment, IOT communication includes a wireless communication for the cloud computing server 2 to communicate wirelessly. The cloud computing server 2 receives the air pollution information, performs an intelligence computing, and intelligently selects and issues the control command to the gas detector 1 for further transmitting to the driving control element D3 so as to enable and control the fan D1 to guide the air pollution to pass through the filter element D2, thereby reaching a gas state of the indoor field A to a cleanroom class with a level of air pollution close to zero. The wireless communication is achieved by one selected from the group consisting of a Wi-Fi module, a Bluetooth module, a radio frequency identification module and a near field communication (NFC) module.

In the embodiment, a handshaking process is employed to judge if any of the wired communication and the wireless communication is disconnected, and an activation mechanism is utilized to select one of the wired communication and the wireless communication which functions normally. Then, via the selected one of the wired communication and the wireless communication, the cloud computing server 2 receives the air pollution information, performs an intelligence computing, and intelligently selects and issues the control command to the gas detector 1 for further transmitting to the driving control element D3 so as to enable and control the fan D1 to guide the air pollution to pass through the filter element D2, thereby reaching a gas state of the indoor field A to a cleanroom class with a level of air pollution close to zero. On the other hand, if both of the wired communication and the wireless communication are disconnected as checked in the handshaking process, the gas detector 1 autonomously computes and compares the air pollution information, and autonomously issues the control command to the driving control element D3 to control and enable the fan D1 so as to guide the air pollution to pass through the filter element D2, thereby reaching a gas state of the indoor field A to a cleanroom class with a level of air pollution close to zero.

The gas filtration device D is disposed in the indoor field A in a build-in or plug-in manner. If the gas filtration device D is disposed in the indoor field A in a build-in manner (as shown in FIG. 1A and FIG. 1B), at least one circulation gas-returning channel C is disposed in the indoor field A, wherein the circulation gas-returning channel C is isolated by a plurality of partitions C1 and formed as side walls of the indoor field A, and a plurality of gas-introducing openings C2 and a plurality of gas-returning openings C3 are formed on the partitions C1. Moreover, the gas filtration device D is disposed in the circulation gas-return channel C of the indoor field A and corresponds to the gas-introducing openings C2.

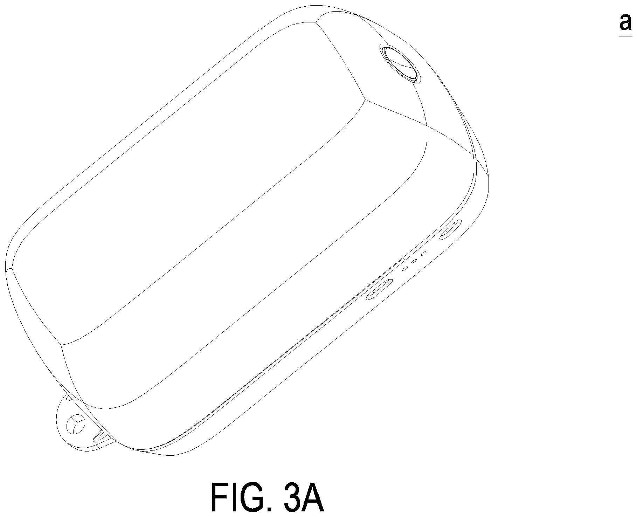

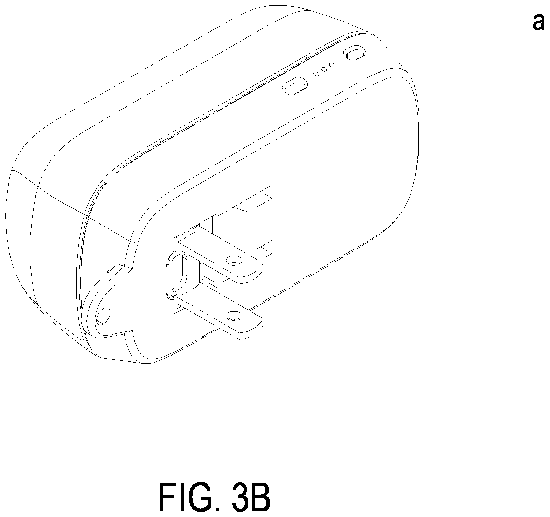

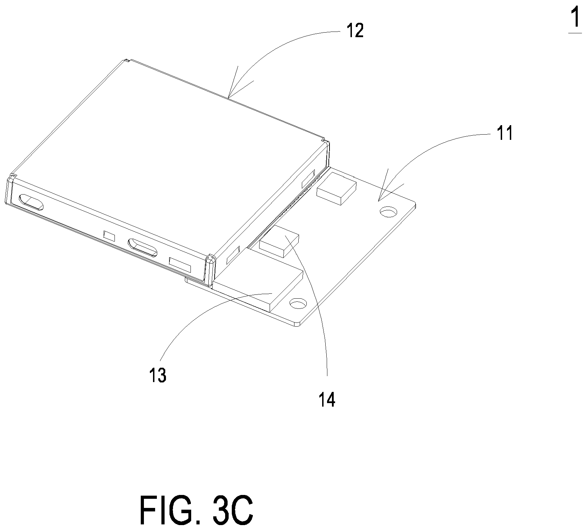

In the embodiment, as shown in FIG. 1A and FIG. 1B, the gas filtration device D includes a gas exchanging device 1D. The gas exchanging device 1D is in communication with a gas-introducing channel 1D1 for fluid communicating with an outdoor field B. The gas detector 1 of the gas exchanging device 1D receives the control command via IOT communication and transmits the control command to the driving control element D3 for enabling the fan D1 to introduce the gas from the outdoor field B into the indoor filed A for gas exchanging. Notably, as shown in FIG. 1A and FIG. 1B, a plurality of gas detectors a are further disposed in the indoor field A and the outdoor field B for detecting air pollution and outputting air pollution information, and each of the gas detectors a includes a gas detection module installed therein. Moreover, as shown in FIG. 3A and FIG. 3B, the gas detector a can be configured with an external power terminal, and the external power terminal can be directly inserted into the power interface in the indoor field A or the outdoor field B for enabling the detection of air pollution. The function of the gas detector a is identical to that of the gas detector 1 shown in FIG. 3C which is configured by a gas detection module without external power supply terminal. The difference is that the gas detector 1 is directly disposed on the gas filtration device D in the type of gas detection module and electrically connected to the driving control element D3 for detecting the air pollution, and receiving and transmitting the control command to the driving control element D to enable the fan D1 of the gas exchanging device 1D. Preferably but not exclusively, the gas exchanging device 1D is a fresh air exchanging system.

The gas detector a outputs the air pollution information via IOT communication, and the cloud computing server 2 receives the air pollution information of the indoor field A and the outdoor field B, stores the air pollution information to form a big data database of air pollution data, and performs an intelligence computing to compare the air pollution information of the indoor field A and the outdoor field B. When the value of the air pollution information of the indoor field A is higher than the value of the air pollution information of the outdoor field B, the cloud computing server 2 issues the control command to the gas detector a via IOT communication for further transmitting to the driving control element D3 so as to enable and control the fan D1 of the gas exchanging device 1D, thereby introducing the gas from the outdoor field B into the indoor field A for gas-exchanging. In the embodiment, the air pollution information of the indoor field A and the outdoor field B includes information of carbon dioxide (CO₂), and the value of carbon dioxide (CO₂) detected by the gas detector 1 should be maintained to be lower than a safe air pollution value of 800 PPM. If the value of the air pollution information is higher than the safe air pollution value, the gas exchanging device 1D introduces the gas from the outdoor field B into the indoor field A for gas exchanging. Notably, a valve 1D2 is disposed between the gas-introducing channel 1D1 and the outdoor field B and is controlled by the driving control element D3. When the gas detector 1 receives the control command and then transmits the control command to the driving control element D3 to enable the fan D1 of the gas exchanging device 1D, the valve 1D2 is simultaneously controlled to open, so that the gas-introducing channel 1D1 is in fluid communication with the outdoor field B, and the gas is introduced from the outdoor field B into the indoor field A for gas exchanging.

Preferably but not exclusively, the gas filtration device D includes a circulation filtration device 2D. The gas detector 1 outputs the air pollution information, and the cloud computing server 2 receives the air pollution information, stores the air pollution information to form the big data database of air pollution data, performs the intelligence computing for comparison, and intelligently selects and issues the control command. The gas detector 1 receives the control command via IOT communication and transmits the control command to the driving control element D3 to enable the fan D1 of the circulation filtration device 2D, thereby guiding the air pollution to pass through the filer element D2 for filtration and then exhaust into the indoor field A through the gas-introducing opening C2.

Preferably but not exclusively, the gas filtration device D includes an air conditioning device 3D, which is disposed in the indoor field A for adjusting temperature and humidity. The gas detector 1 receives the control command via IOT communication and transmits the control command to the driving control element D3 to enable the air conditioning device 3D, and the gas detector 1 outputs gas temperature and humidity information of the indoor field A to the cloud computing server 2. The cloud computing server 2 receives and stores the gas temperature and humidity information to form the big data database of air pollution data. Notably, the temperature and humidity of the indoor field A is controlled to maintain at temperature of 25°C±3°C and humidity of 50%±10%.

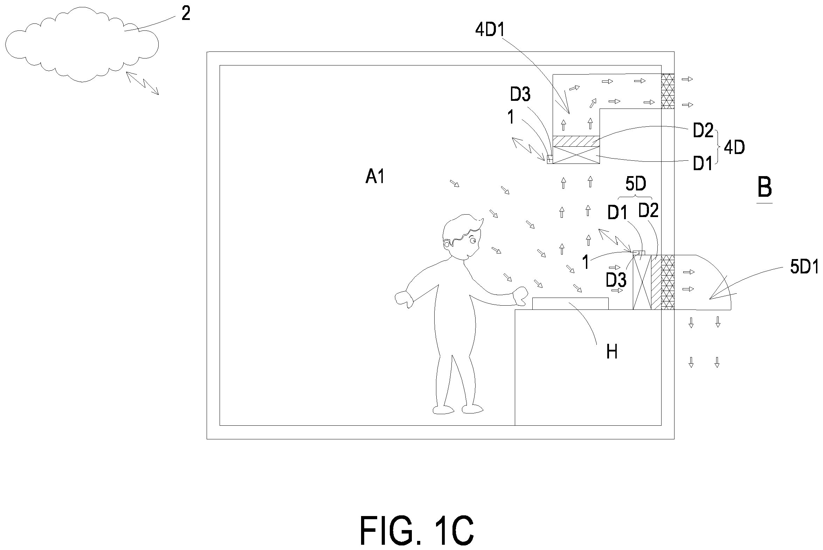

Preferably but not exclusively, the gas filtration device D includes a negative pressure exhaust fan 4D, which is disposed in a kitchen unit A1 in the indoor field A, as shown in FIG. 1B and FIG. 1C, and a gas-introducing channel 4D1 is disposed for fluid communicating with the outdoor field B. The gas detector 1 outputs the air pollution information, and the cloud computing server 2 receives the air pollution information, stores the air pollution information to form the big data database of air pollution data, performs the intelligence computing for comparison, and intelligently selects and issues the control command. The gas detector 1 receives the control command via IOT communication and transmits the control command to the driving control element D3 to enable the fan D1 of the negative pressure exhaust fan 4D, thereby guiding the air pollution to pass through the filer element D2 for filtration and thus speeding up the exhausting of the air pollution in the indoor field A to the outdoor field B.

Preferably but not exclusively, the gas filtration device D includes a range hood 5D, which is disposed in a kitchen unit A1 in the indoor field A and embedded in the circulation gas-returning channel, as shown in FIG. 1B and FIG. 1C, and a gas-introducing channel 5D1 is disposed for fluid communicating with the outdoor field B. The gas detector 1 outputs the air pollution information, and the cloud computing server 2 receives the air pollution information, stores the air pollution information to form the big data database of air pollution data, performs the intelligence computing for comparison, and intelligently selects and issues the control command. The gas detector 1 receives the control command via IOT communication and transmits the control command to the driving control element D3 to enable the fan D1 of the range hood 5D, thereby guiding the air pollution to pass through the filer element D2 for filtration and thus speeding up the exhausting of the air pollution in the indoor field A to the outdoor field B.

Preferably but not exclusively, the gas filtration device D includes a bathroom exhaust fan 6D, which is disposed in a bathroom unit A2 in the indoor field A and embedded in the circulation gas-returning channel, as shown in FIG. 1B, and a gas-introducing channel 6D1 is disposed for fluid communicating with the outdoor field B. The gas detector 1 outputs the air pollution information, and the cloud computing server 2 receives the air pollution information, stores the air pollution information to form the big data database of air pollution data, performs the intelligence computing for comparison, and intelligently selects and issues the control command. The gas detector 1 receives the control command via IOT communication and transmits the control command to the driving control element D3 to enable the bathroom exhaust fan 6D, thereby guiding the air pollution to pass through the filer element D2 for filtration and thus speeding up the exhausting of the air pollution in the indoor field A to the outdoor field B. At the same time, the gas detector 1 of the bathroom exhaust fan 6D receives the control command, which is issued by the cloud computing server 2, via IOT communication and transmits the control command to the driving control element D3 to enable the bathroom exhaust fan 6D for further adjusting the temperature and humidity of the indoor field A. Notably, the temperature and humidity of the indoor field A is controlled to maintain at temperature of 25°C±3°C and humidity of 50%±10%.

In view of above, the present disclosure provides an indoor air cleaning system with disconnection detecting and preventing mechanism. In the embodiments, each gas filtration device D is equipped with a gas detector 1 for detecting air pollution, and the gas filtration D outputs air pollution information, and receives and transmits the control command to the driving control element D3, which is electrically connected to the gas filtration device D, so that the driving control element D3 controls the enablement of the gas filtration device D. Moreover, the IOT communication utilized by the gas detector 1 to output the air pollution information includes dual ways, the wired communication and the wireless communication, and through the handshaking process and autonomous judging, one of the wired communication and the wireless communication which functions normally is selected to perform the transmission of the detected air pollution information to the cloud computing server 2. Then, the cloud computing server 2 generates and feedbacks the control command to the gas detector 1 for further transmitting to the driving control element D3 electrically connected therewith, so as to control the enablement of the gas filtration device D. Whereby, a mechanism for detecting and preventing disconnection of IOT communication is achieved. On the other hand, if both the wired communication and the wireless communication are disconnected when the gas detector 1 outputs the air pollution information, the gas detector 1 autonomously computes and compares the air pollution information, and issues the control command to the driving control element D3 of the gas filtration device D to enable the fan D1 for guiding the air pollution to pass through the filter element D2, thereby reaching a gas state of the indoor field A to a cleanroom class with a level of air pollution close to zero.

Furthermore, in the indoor air cleaning system with disconnection detecting and preventing mechanism of the present disclosure, by receiving and storing the air pollution information of the indoor field A and the outdoor field B to form the big data database of air pollution data, receiving the temperature and humidity information outputted by the air conditioning device 3D, and performing the intelligence computing for comparison based on the big data database of air pollution data and the temperature and humidity information, the cloud computing server 2 intelligently selects and issues the control command to enable the fan D1 of the gas filtration device D for continuously generating an internal directional circulation airflow in the indoor field A so as to guide the air pollution to pass through the filter element D2 multiple times for filtration. That is, the cloud computing server 2 intelligently computes the cleanliness specification of real time number of suspended particles in the indoor field A and intelligently selects and issues the control command to the plurality of gas filtration devices D for timely enabling the fans D1 of the gas filtration devices D, so that the air volume and start-up period of the fans D1 can be adjusted based on the cleanliness specification of real time number of suspended particles, thereby improving the cleaning efficiency of the indoor field A, reducing the environment noise of the indoor field A, and generating the internal directional circulation airflow in the indoor field A to guide the air pollution to pass through the filter element D2 multiple times for filtration. In that, the cleanliness specification of the gas state of the indoor field A based on a number of suspended particles having diameters smaller than 2.5 µm can meet the cleanliness of cleanroom classes 1-9 (ZAP Class room 1-9).

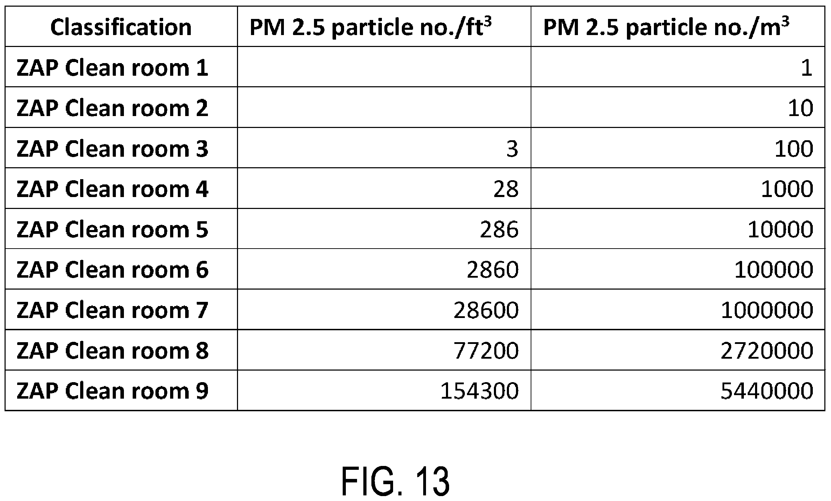

Please refer to FIG. 13, which is a table showing classifications of gas state in the indoor filed A by cleanliness specifications based on a number of suspended particles having diameters smaller than 2.5 µm. The indoor air cleaning system with disconnection detecting and preventing mechanism provided in the present disclosure can reduce the number of suspended particles having diameters smaller than 2.5 µm in the indoor field A to less than 1 particle per cubic meter to meet the cleanliness of cleanroom class 1 (ZAP Class room 1); can reduce the number of suspended particles having diameters smaller than 2.5 µm in the indoor field A to less than 10 particles per cubic meter to meet the cleanliness of cleanroom class 2 (ZAP Class room 2); can reduce the number of suspended particles having diameters smaller than 2.5 µm in the indoor field A to less than 3 particles per cubic feet or less than 100 particles per cubic meter to meet the cleanliness of cleanroom class 3 (ZAP Class room 3); can reduce the number of suspended particles having diameters smaller than 2.5 µm in the indoor field A to less than 28 particles per cubic feet or less than 1000 particles per cubic meter to meet the cleanliness of cleanroom class 4 (ZAP Class room 4); can reduce the number of suspended particles having diameters smaller than 2.5 µm in the indoor field A to less than 286 particles per cubic feet or less than 10000 particles per cubic meter to meet the cleanliness of cleanroom class 5 (ZAP Class room 5); can reduce the number of suspended particles having diameters smaller than 2.5 µm in the indoor field A to less than 2860 particles per cubic feet or less than 100000 particles per cubic meter to meet the cleanliness of cleanroom class 6 (ZAP Class room 6); can reduce the number of suspended particles having diameters smaller than 2.5 µm in the indoor field A to less than 28600 particles per cubic feet or less than 1000000 particles per cubic meter to meet the cleanliness of cleanroom class 7 (ZAP Class room 7); can reduce the number of suspended particles having diameters smaller than 2.5 µm in the indoor field A to less than 77200 particles per cubic feet or less than 2720000 particles per cubic meter to meet the cleanliness of cleanroom class 8 (ZAP Class room 8); and can reduce the number of suspended particles having diameters smaller than 2.5 µm in the indoor field A to less than 154300 particles per cubic feet or less than 5440000 particles per cubic meter to meet the cleanliness of cleanroom class 9 (ZAP Class room 9).

In the indoor air cleaning system with disconnection detecting and preventing mechanism of the present disclosure, the gas detector 1 and the gas detector a respectively described above both include the gas detection module with identical function, and the only difference is the appearances thereof. The structure of the gas detection module of the gas detector 1 and the gas detector a is described in detail below.

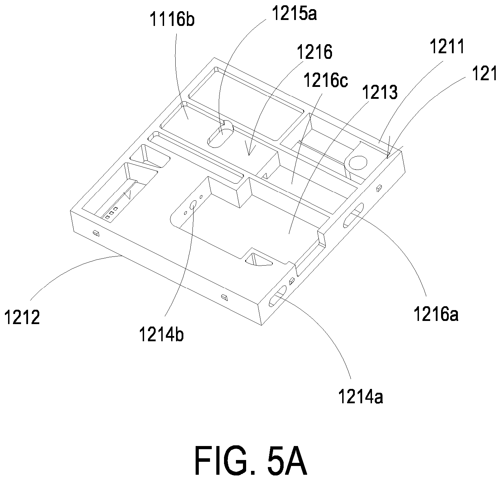

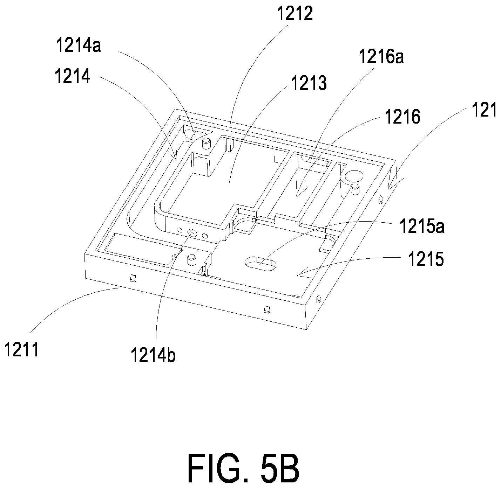

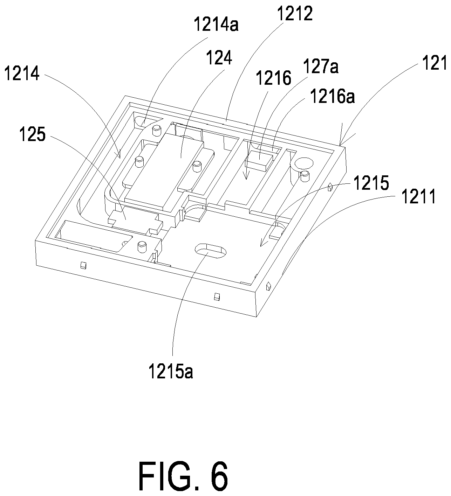

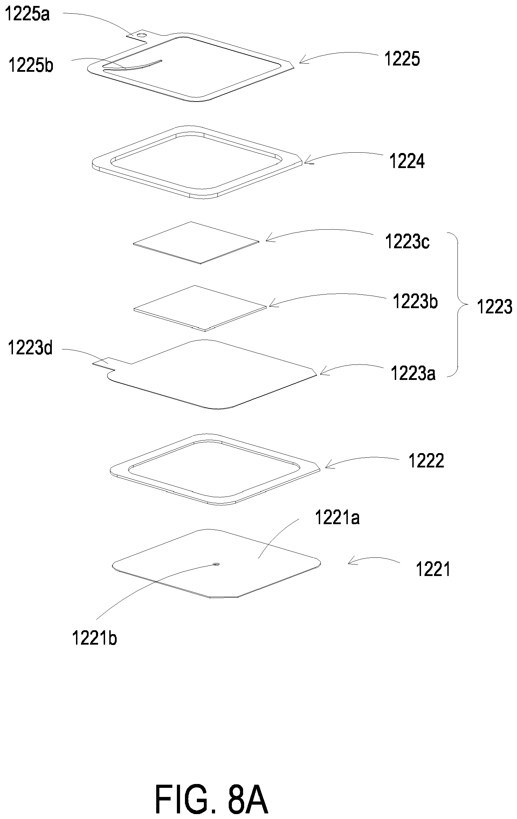

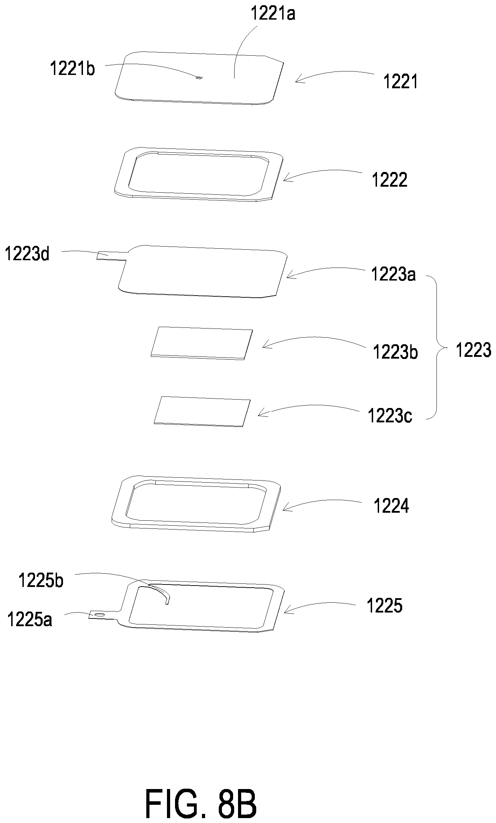

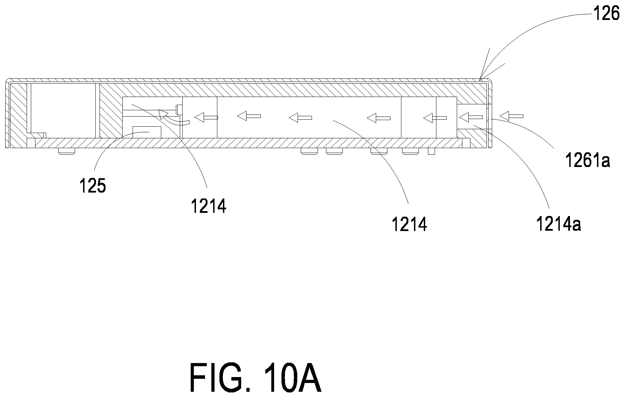

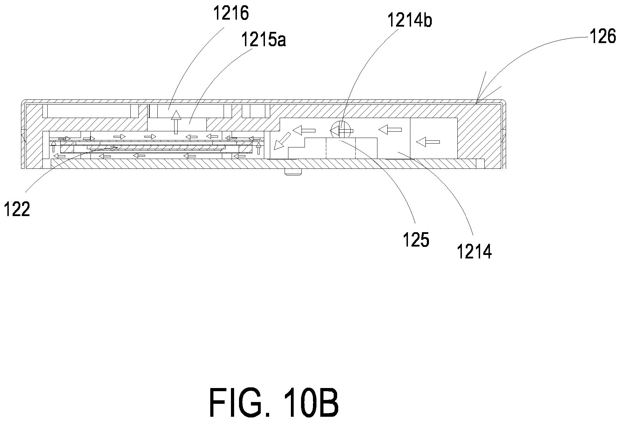

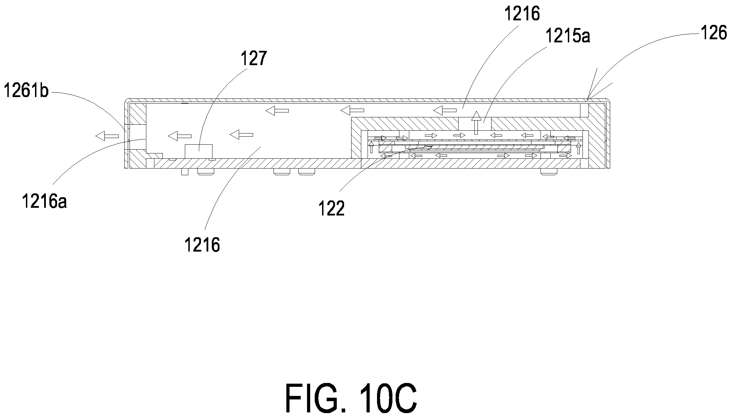

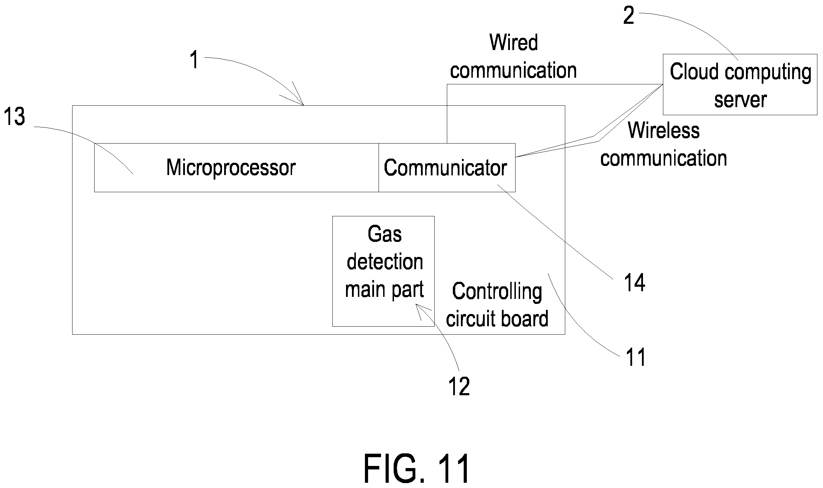

Please refer to FIG. 3A to FIG. 11. In the embodiment, the gas detection module includes a controlling circuit board 11, a gas detection main part 12, a microprocessor 13 and a communicator 14. The gas detection main part 12, the microprocessor 13 and the communicator 14 are integrally packaged on the controlling circuit board 11 and electrically connected to each other. In the embodiment, the microprocessor 13 and the communicator 14 are mounted on the controlling circuit board 11. In one embodiment, the controlling circuit board 11 is electrically connected to the driving control element D3. The microprocessor 13 controls the driving signal of the gas detection main part 12 for enabling the detection. In this way, the gas detection main part 12 detects the air pollution and outputs the air pollution information, and the microprocessor 13 receives, processes and provides the air pollution information to the communicator 14 for externally transmitting to the cloud computing server 2 via IOT communication.

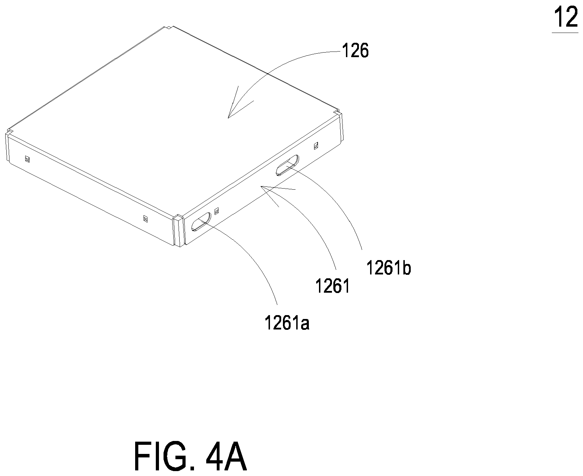

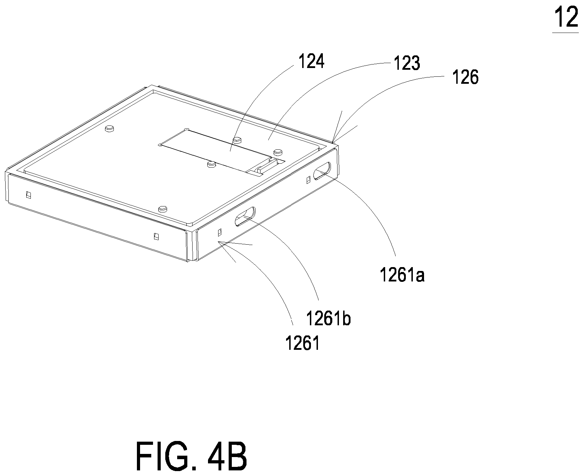

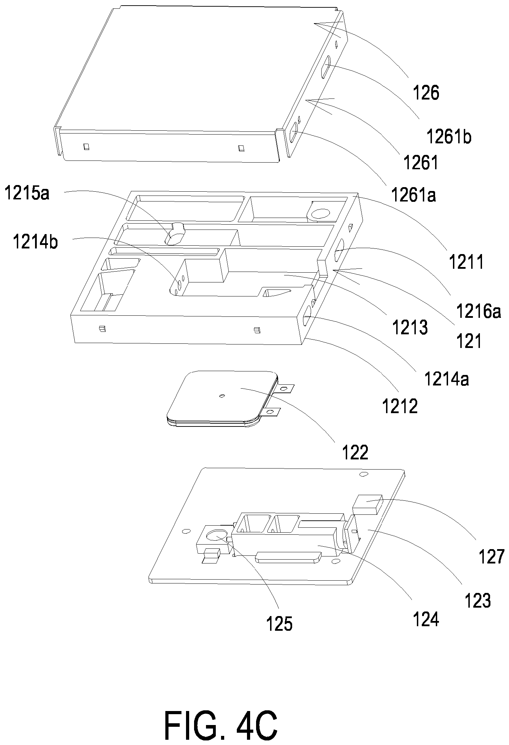

Please refer to FIG. 4A to FIG. 9A. The gas detection main part 12 includes a base 121, a piezoelectric actuator 122, a driving circuit board 123, a laser component 124, a particulate sensor 125, and an outer cover 126. In the embodiment, the base 121 includes a first surface 1211, a second surface 1212, a laser loading region 1213, a gas-inlet groove 1214, a gas-guiding-component loading region 1215 and a gas-outlet groove 1216. The first surface 1211 and the second surface 1212 are two surfaces opposite to each other. The laser loading region 1213 is hollowed out from the first surface 1211 toward the second surface 1212. The outer cover 126 covers the base 121 and includes a side plate 1261. The side plate 1261 has an inlet opening 1261a and an outlet opening 1261b. The gas-inlet groove 1214 is concavely formed from the second surface 1212 and disposed adjacent to the laser loading region 1213. The gas-inlet groove 1214 includes a gas-inlet 1214a and two lateral walls. The gas-inlet 1214a is in communication with an environment outside the base 121, and is spatially corresponding in position to an inlet opening 1261a of the outer cover 126. Two transparent windows 1214b are opened on the two lateral walls of the gas-inlet groove 1214 and are in communication with the laser loading region 1213. Therefore, the first surface 1211 of the base 121 is covered and attached by the outer cover 126, and the second surface 1212 is covered and attached by the driving circuit board 123, so that an inlet path is defined by the gas-inlet groove 1214.

In the embodiment, the gas-guiding-component loading region 1215 is concavely formed from the second surface 1212 and in communication with the gas-inlet groove 1214. A ventilation hole 1215a penetrates a bottom surface of the gas-guiding-component loading region 1215. The gas-guiding-component loading region 1215 includes four positioning protrusions 1215b disposed at four corners of the gas-guiding-component loading region 1215, respectively. In the embodiment, the gas-outlet groove 1216 includes a gas-outlet 1216a, and the gas-outlet 1216a is spatially corresponding to the outlet opening 1261b of the outer cover 126. The gas-outlet groove 1216 includes a first section 1216b and a second section 1216c. The first section 1216b is concavely formed out from the first surface 1211 in a region spatially corresponding to a vertical projection area of the gas-guiding-component loading region 1215. The second section 1216c is hollowed out from the first surface 1211 to the second surface 1212 in a region where the first surface 1211 is extended from the vertical projection area of the gas-guiding-component loading region 1215. The first section 1216b and the second section 1216c are connected to form a stepped structure. Moreover, the first section 1216b of the gas-outlet groove 1216 is in communication with the ventilation hole 1215a of the gas-guiding-component loading region 1215, and the second section 1216c of the gas-outlet groove 1216 is in communication with the gas-outlet 1216a. In that, when first surface 1211 of the base 121 is attached and covered by the outer cover 126 and the second surface 1212 of the base 121 is attached and covered by the driving circuit board 123, the gas-outlet groove 1216 and the driving circuit board 123 collaboratively define an outlet path.

In the embodiment, the laser component 124 and the particulate sensor 125 are disposed on and electrically connected to the driving circuit board 123 and located within the base 121. In order to clearly describe and illustrate the positions of the laser component 124 and the particulate sensor 125 in the base 121, the driving circuit board 123 is intentionally omitted. The laser component 124 is accommodated in the laser loading region 1213 of the base 121, and the particulate sensor 125 is accommodated in the gas-inlet groove 1214 of the base 121 and is aligned to the laser component 124. In addition, the laser component 124 is spatially corresponding to the transparent window 1214b, so that a light beam emitted by the laser component 124 passes through the transparent window 1214b and is irradiated into the gas-inlet groove 1214. A light beam path emitted from the laser component 124 passes through the transparent window 1214b and extends in an orthogonal direction perpendicular to the gas-inlet groove 1214. In the embodiment, a projecting light beam emitted from the laser component 124 passes through the transparent window 1214b and enters the gas-inlet groove 1214 to irradiate the suspended particles contained in the gas passing through the gas-inlet groove 1214. When the suspended particles contained in the gas are irradiated and generate scattered light spots, the scattered light spots are received and calculated by the particulate sensor 125, which is in an orthogonal direction perpendicular to the gas-inlet groove 1214, to obtain the gas detection information.

In the embodiment, the piezoelectric actuator 122 is accommodated in the square-shaped gas-guiding-component loading region 1215 of the base 121. In addition, the gas-guiding-component loading region 1215 is in fluid communication with the gas-inlet groove 1214. When the piezoelectric actuator 122 is enabled, the gas in the gas-inlet groove 1214 is inhaled by the piezoelectric actuator 122, so that the gas flows into the piezoelectric actuator 122, and is transported into the gas-outlet groove 1216 through the ventilation hole 1215a of the gas-guiding-component loading region 1215. Moreover, the driving circuit board 123 covers the second surface 1212 of the base 121, and the laser component 124 is positioned and disposed on the driving circuit board 123, and is electrically connected to the driving circuit board 123. The particulate sensor 125 is also positioned and disposed on the driving circuit board 123 and electrically connected to the driving circuit board 123. In that, when the outer cover 126 covers the base 121, the inlet opening 1261a is spatially corresponding to the gas-inlet 1214a of the base 121, and the outlet opening 1261b is spatially corresponding to the gas-outlet 1216a of the base 121.

In the embodiment, the piezoelectric actuator 122 includes a gas-injection plate 1221, a chamber frame 1222, an actuator element 1223, an insulation frame 1224 and a conductive frame 1225. In the embodiment, the gas-injection plate 1221 is made by a flexible material and includes a suspension plate 1221a and a hollow aperture 1221b. The suspension plate 1221a is a sheet structure and is permitted to undergo a bending deformation. Preferably but not exclusively, the shape and the size of the suspension plate 1221a are corresponding to the inner edge of the gas-guiding-component loading region 1215, but not limited thereto. The hollow aperture 1221b passes through a center of the suspension plate 1221a, so as to allow the gas to flow therethrough. Preferably but not exclusively, in the embodiment, the shape of the suspension plate 1221a is selected from the group consisting of a square, a circle, an ellipse, a triangle and a polygon, but not limited thereto.

In the embodiment, the chamber frame 1222 is carried and stacked on the gas-injection plate 1221. In addition, the shape of the chamber frame 1222 is corresponding to the gas-injection plate 1221. The actuator element 1223 is carried and stacked on the chamber frame 1222 and collaboratively defines a resonance chamber 1226 with the chamber frame 1222 and the gas-injection plate 1221. The insulation frame 1224 is carried and stacked on the actuator element 1223 and the appearance of the insulation frame 1224 is similar to that of the chamber frame 1222. The conductive frame 1225 is carried and stacked on the insulation frame 1224, and the appearance of the conductive frame 1225 is similar to that of the insulation frame 1224. In addition, the conductive frame 1225 includes a conducting pin 1225a and a conducting electrode 1225b. The conducting pin 1225a is extended outwardly from an outer edge of the conductive frame 1225, and the conducting electrode 1225b is extended inwardly from an inner edge of the conductive frame 1225. Moreover, the actuator element 1223 further includes a piezoelectric carrying plate 1223a, an adjusting resonance plate 1223b and a piezoelectric plate 1223c. The piezoelectric carrying plate 1223a is carried and stacked on the chamber frame 1222. The adjusting resonance plate 1223b is carried and stacked on the piezoelectric carrying plate 1223a. The piezoelectric plate 1223c is carried and stacked on the adjusting resonance plate 1223b. The adjusting resonance plate 1223b and the piezoelectric plate 1223c are accommodated in the insulation frame 1224. The conducting electrode 1225b of the conductive frame 1225 is electrically connected to the piezoelectric plate 1223c. In the embodiment, the piezoelectric carrying plate 1223a and the adjusting resonance plate 1223b are made by a conductive material. The piezoelectric carrying plate 1223a includes a piezoelectric pin 1223d. The piezoelectric pin 1223d and the conducting pin 1225a are electrically connected to a driving circuit (not shown) on the driving circuit board 123, so as to receive a driving signal, such as a driving frequency and a driving voltage. Through this structure, a circuit is formed by the piezoelectric pin 1223d, the piezoelectric carrying plate 1223a, the adjusting resonance plate 1223b, the piezoelectric plate 1223c, the conducting electrode 1225b, the conductive frame 1225 and the conducting pin 1225a for transmitting the driving signal. Moreover, the insulation frame 1224 is insulated between the conductive frame 1225 and the actuator element 1223, so as to avoid the occurrence of a short circuit. Thereby, the driving signal is transmitted to the piezoelectric plate 1223c. After receiving the driving signal, the piezoelectric plate 1223c deforms due to the piezoelectric effect, and the piezoelectric carrying plate 1223a and the adjusting resonance plate 1223b are further driven to generate the bending deformation in the reciprocating manner.

Furthermore, in the embodiment, the adjusting resonance plate 1223b is located between the piezoelectric plate 1223c and the piezoelectric carrying plate 1223a and served as a cushion between the piezoelectric plate 1223c and the piezoelectric carrying plate 1223a. Thereby, the vibration frequency of the piezoelectric carrying plate 1223a is adjustable. Basically, the thickness of the adjusting resonance plate 1223b is greater than the thickness of the piezoelectric carrying plate 1223a, and the vibration frequency of the actuator element 1223 can be adjusted by adjusting the thickness of the adjusting resonance plate 1223b.

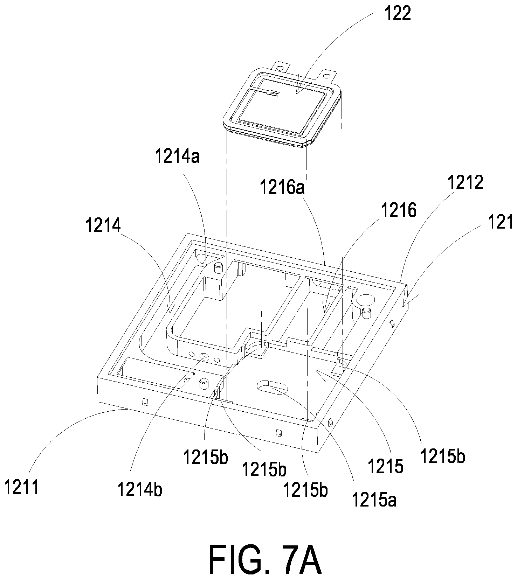

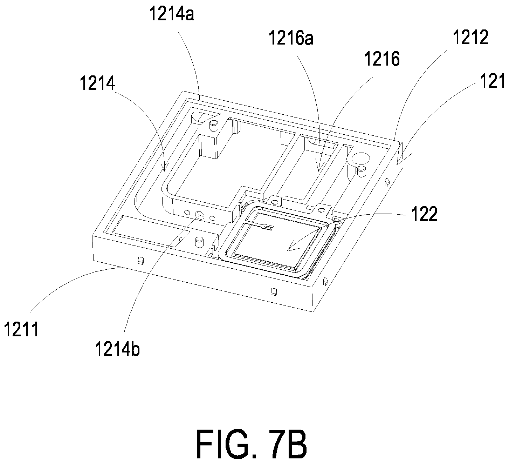

Please further refer to FIG. 7A, FIG. 7B, FIG.8A, FIG. 8B and FIG. 9A. In the embodiment, the gas-injection plate 1221, the chamber frame 1222, the actuator element 1223, the insulation frame 1224 and the conductive frame 1225 are stacked and positioned in the gas-guiding-component loading region 1215 sequentially, so that the piezoelectric actuator 122 is supported and positioned in the gas-guiding-component loading region 1215. A clearance 1221c is defined between the suspension plate 1221a and an inner edge of the gas-guiding-component loading region 1215 for gas flowing therethrough. In the embodiment, a flowing chamber 1227 is formed between the gas-injection plate 1221 and the bottom surface of the gas-guiding-component loading region 1215. The flowing chamber 1227 is in communication with the resonance chamber 1226 between the actuator element 1223, the chamber frame 1222 and the gas-injection plate 1221 through the hollow aperture 1221b of the gas-injection plate 1221. By controlling the vibration frequency of the gas in the resonance chamber 1226 to be close to the vibration frequency of the suspension plate 1221a, the Helmholtz resonance effect is generated between the resonance chamber 1226 and the suspension plate 1221a, so as to improve the efficiency of gas transportation. When the piezoelectric plate 1223c is moved away from the bottom surface of the gas-guiding-component loading region 1215, the suspension plate 1221a of the gas-injection plate 1221 is driven to move away from the bottom surface of the gas-guiding-component loading region 1215 by the piezoelectric plate 1223c. In that, the volume of the flowing chamber 1227 is expanded rapidly, the internal pressure of the flowing chamber 1227 is decreased to form a negative pressure, and the gas outside the piezoelectric actuator 122 is inhaled through the clearance 1221c and enters the resonance chamber 1226 through the hollow aperture 1221b. Consequently, the pressure in the resonance chamber 1226 is increased to generate a pressure gradient. When the suspension plate 1221a of the gas-injection plate 1221 is driven by the piezoelectric plate 1223c to move toward the bottom surface of the gas-guiding-component loading region 1215, the gas in the resonance chamber 1226 is discharged out rapidly through the hollow aperture 1221b, and the gas in the flowing chamber 1227 is compressed, thereby the converged gas is quickly and massively ejected out of the flowing chamber 1227 under the condition close to an ideal gas state of the Bernoulli's law, and transported to the ventilation hole 1215a of the gas-guiding-component loading region 1215.

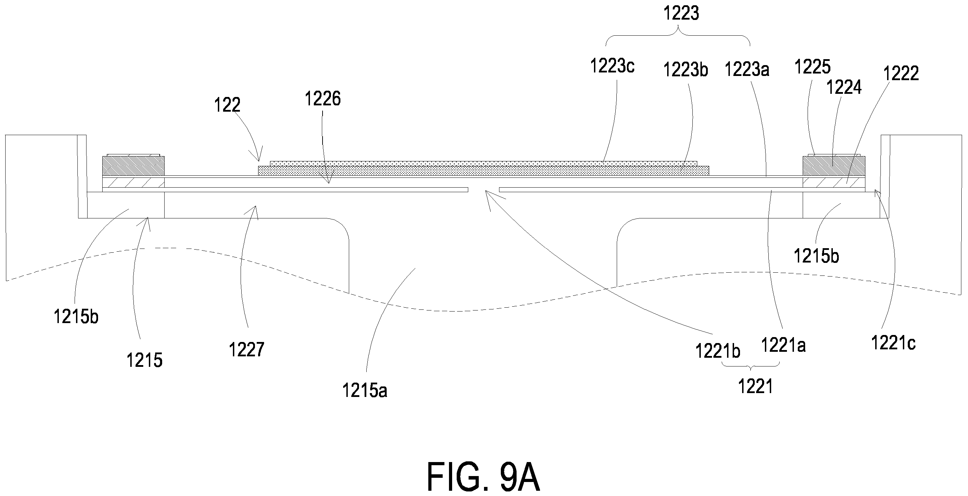

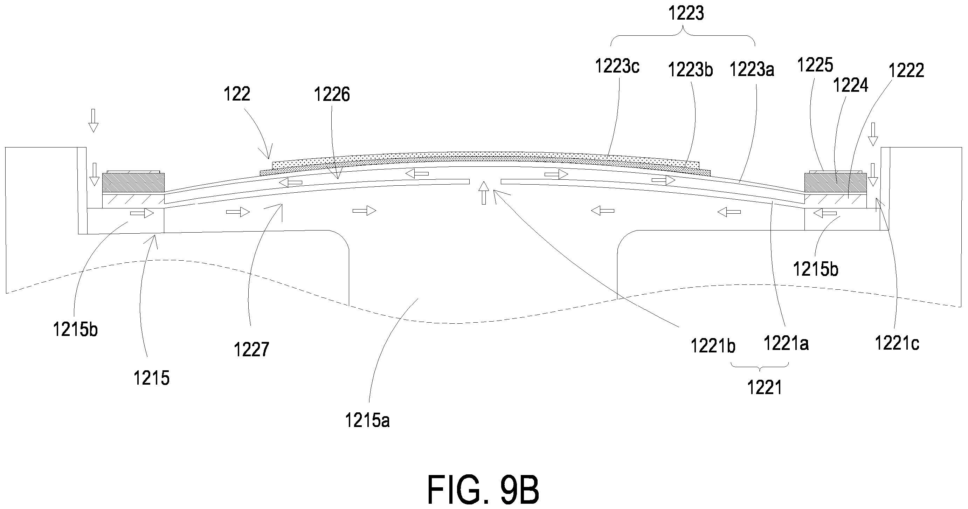

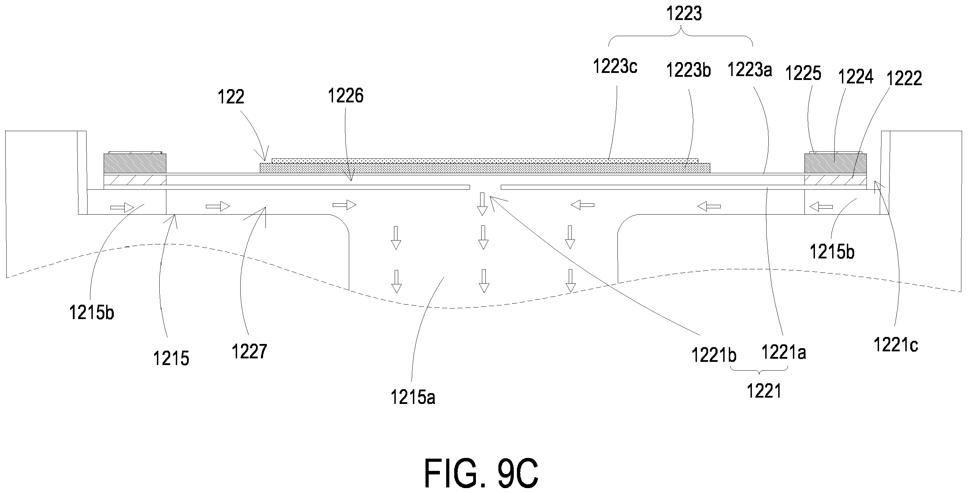

By repeating the above operation steps shown in FIG. 9B and FIG. 9C, the piezoelectric plate 1223c is driven to generate the bending deformation in a reciprocating manner. According to the principle of inertia, since the gas pressure inside the resonance chamber 1226 is lower than the equilibrium gas pressure after the converged gas is ejected out, the gas is introduced into the resonance chamber 1226 again. Moreover, the vibration frequency of the gas in the resonance chamber 1226 is controlled to be close to the vibration frequency of the piezoelectric plate 1223c, so as to generate the Helmholtz resonance effect to achieve the gas transportation at high speed and in large quantities. The gas is inhaled through the gas-inlet 1214a on the outer cover 126, flows into the gas-inlet groove 1214 of the base 121 through the gas-inlet 1214a, and is transported to the position of the particulate sensor 125. The piezoelectric actuator 122 is enabled continuously to inhale the gas into the inlet path, and facilitate the gas outside the gas detection module to be introduced rapidly, flow stably, and transported above the particulate sensor 125. At this time, a projecting light beam emitted from the laser component 124 passes through the transparent window 1214b to irritate the suspended particles contained in the gas flowing above the particulate sensor 125 in the gas-inlet groove 1214. When the suspended particles contained in the gas are irradiated and generate scattered light spots, the scattered light spots are received and calculated by the particulate sensor 125 for obtaining related information about the sizes and the concentration of the suspended particles contained in the gas. Moreover, the gas above the particulate sensor 125 is continuously driven and transported by the piezoelectric actuator 122, flows into the ventilation hole 1215a of the gas-guiding-component loading region 1215, and is transported to the gas-outlet groove 1216. At last, after the gas flows into the gas outlet groove 1216, the gas is continuously transported into the gas-outlet groove 1216 by the piezoelectric actuator 122, and thus the gas in the gas-outlet groove 1216 is pushed to discharge through the gas-outlet 1216a and the outlet opening 1261b.

The gas detector a of the present disclosure not only can detect the particulate matters in the gas, but also can detect the gas characteristics of the introduced gas, for example, to determine whether the gas is formaldehyde, ammonia, carbon monoxide, carbon dioxide, oxygen, ozone, or the like. Therefore, in some embodiments, the gas detector a of the present disclosure further includes a gas sensor 127 positioned and disposed on the driving circuit board 123, electrically connected to the driving circuit board 123, and accommodated in the gas-outlet groove 1216, so as to detect the gas characteristics of the introduced gas. Preferably but not exclusively, in an embodiment, the gas sensor 127 includes a volatile-organic-compound sensor for detecting the information of carbon dioxide (CO₂) or volatile organic compounds (TVOC). Preferably but not exclusively, in an embodiment, the gas sensor 127 includes a formaldehyde sensor for detecting the information of formaldehyde (HCHO) gas. Preferably but not exclusively, in an embodiment, the gas sensor 127 includes a bacteria sensor for detecting the information of bacteria or fungi. Preferably but not exclusively, in an embodiment, the gas sensor 127 includes a virus sensor for detecting the information of virus in the gas. Preferably but not exclusively, the gas sensor 127 is a temperature and humidity sensor for detecting the temperature and humidity information of the gas.

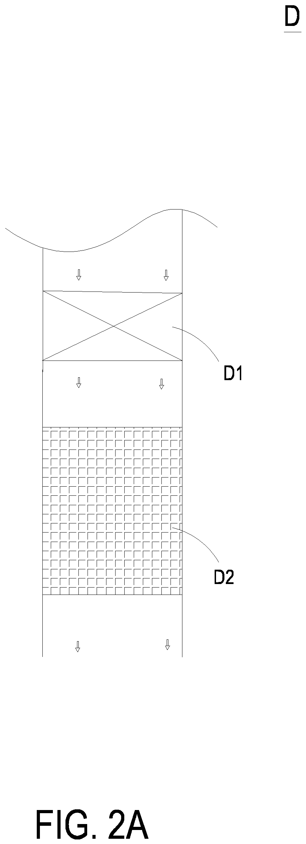

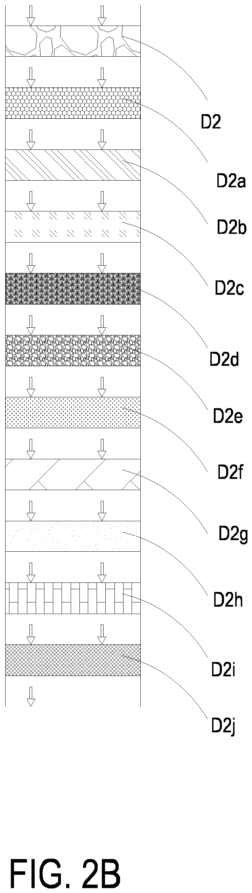

Please refer to FIG. 2A and FIG. 2B. In the embodiment, the fan D1 of the gas filtration device D is enabled and controlled to guide the air pollution to pass through the filter element D2 for filtration. In the embodiment, the filter element D2 includes an ultra low penetration air (ULPA) filter screen or a high efficiency particulate air (HEPA) filter screen which is configured to absorb the chemical smoke, the bacteria, the dust particles and the pollen contained in the air pollution for achieving the effect of filtration and purification. Please refer to FIG. 2A, the filter element D2 is further combined with a material for providing sterilization effect in physical or chemical means by passing therethrough the air pollution, and the airflow of the fan D1 flows in the path indicated by the arrows. As shown in FIG. 2B, the filter element D2 is combined with a decomposition layer through coating for sterilizing in chemical means. Preferably but not exclusively, the decomposition layer includes an activated carbon D2a configured to remove organic and inorganic substances in the air pollution, and remove colored and odorous substances. Preferably but not exclusively, the decomposition layer includes a cleansing factor containing chlorine dioxide layer D2b configured to inhibit viruses, bacteria, fungi, influenza A, influenza B, enterovirus and norovirus in the air pollution, and the inhibition ratio can reach 99% and more, thereby reducing the cross-infection of viruses. Preferably but not exclusively, the decomposition layer includes an herbal protective layer D2c extracted from ginkgo and Japanese Rhus chinensis configured to resist allergy effectively and destroy a surface protein of influenza virus (such as H1N1 influenza virus) passing therethrough. Preferably but not exclusively, the decomposition layer includes a silver ion D2d configured to inhibit viruses, bacteria and fungi contained in the air pollution. Preferably but not exclusively, the decomposition layer includes a zeolite D2e configured to remove ammonia nitrogen, heavy metals, organic pollutants, Escherichia coli, phenol, chloroform and anionic surfactants. Furthermore, in some embodiments, the filter element D2 is combined with a light irradiation element to sterilize in chemical means. Preferably but not exclusively, the light irradiation element is a photo-catalyst unit including a photo catalyst D2f and an ultraviolet lamp D2g. When the photo catalyst D2f is irradiated by the ultraviolet lamp D2g, the light energy is converted into the electrical energy, thereby decomposing harmful substances and disinfects bacteria contained in the air pollution, so as to achieve the effects of filtration and purification. Preferably but not exclusively, the light irradiation element is a photo-plasma unit including a nanometer irradiation tube D2h. When the introduced air pollution is irradiated by the nanometer irradiation tube D2h, the oxygen molecules and water molecules contained in the air pollution are decomposed into high oxidizing photo-plasma, and an ion flow capable of destroying organic molecules is generated. In that, volatile formaldehyde, volatile toluene and volatile organic compounds (VOC) contained in the air pollution are decomposed into water and carbon dioxide, so as to achieve the effects of filtration and purification. Moreover, in some embodiments, the filter element D2 is combined with a decomposition unit to sterilize in chemical means. Preferably but not exclusively, the decomposition unit is a negative ion unit D2i which makes the suspended particles carrying positive charges in the air pollution to adhere to negative charges, thereby achieving the effects of filtration and purification. Preferably but not exclusively, the decomposition unit is a plasma ion unit D2j. The oxygen molecules and water molecules contained in the air pollution are decomposed into positive hydrogen ions (H⁺) and negative oxygen ions (O²⁻) by the plasma ion. The substances attached with water around the ions are adhered on the surfaces of viruses and bacteria and converted into OH radicals with extremely strong oxidizing power, thereby removing hydrogen (H) from the protein on the surfaces of viruses and bacteria, and thus decomposing (oxidizing) the protein, so as to filter the introduced air pollution and achieve the effects of filtering and purification.

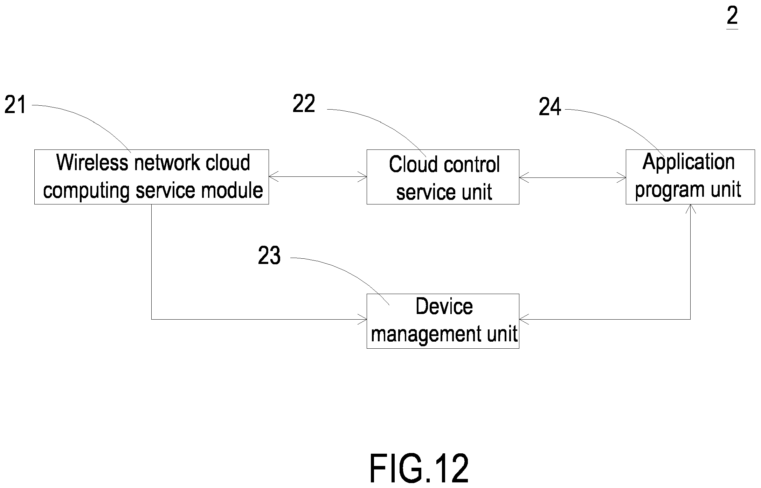

Please refer to FIG. 12. In the embodiment, the cloud computing server 2 includes a wireless network cloud computing service module 21, a cloud control service unit 22, a device management unit 23 and an application program unit 24. The wireless network cloud computing service module 21 receives the outdoor air pollution information of the outdoor field B and the indoor air pollution information of the indoor field A, receives communication information of the gas filtration device D, and transmits the control command. Moreover, the wireless network cloud computing service module 21 receives the air pollution information of the indoor field A and the outdoor field B and transmits thereof to the cloud control service unit 22 to store and form an big data database of air pollution data, and performs the intelligence computing and comparison based on the big data database of air pollution data for transmitting the control command to the wireless network cloud computing service module 21 and then to the gas filtration device D for enablement. The device management unit 23 receives the communication information through the wireless network cloud computing service module 21 for managing the user login and device binding, and the device management information can be provided to the application program unit 24 for system control and management. The application program unit 24 can also display and inform the air pollution information obtained from the cloud control service unit 22, so the user can know the real-time status of air pollution removal through the mobile phone or the communication device. Moreover, the user can control the operation of the indoor air cleaning system through the application program unit 24 of the mobile phone or the communication device.

In summary, the present disclosure provides an indoor air cleaning system with disconnection detecting and preventing mechanism. In the system, each gas filtration device is equipped with a gas detector for detecting air pollution, outputting air pollution information, and receiving and transmitting the control command to the driving control element, which is electrically connected to the gas filtration device, and the driving control element controls the enablement of the gas filtration device. Moreover, the outputting of the air pollution information by the gas detector 1 is achieved via IOT communication, which includes dual ways, the wired communication and the wireless communication, and through the handshaking process and autonomous judging, one of the wired communication and the wireless communication which functions normally is selected to perform the transmission of the detected air pollution information to the cloud computing server. Then, the cloud computing server generates and feedbacks the control command to the gas detector for further transmitting to the driving control element electrically connected therewith so as to control the enablement of the gas filtration device. Whereby, a mechanism for detecting and preventing disconnection of IOT communication is achieved. On the other hand, if both the wired communication and the wireless communication are disconnected when the gas detector outputs the air pollution information, the gas detector autonomously computes and compares the air pollution information and autonomously issues the control command to the driving control element of the gas filtration device to enable and control the fan for guiding the air pollution to pass through the filter element, thereby reaching a gas state of the indoor field to a cleanroom class with a level of air pollution close to zero. Accordingly, the impact and injury for human health caused by the gas hazards in the environment can be avoided. Thus, the present disclosure is extremely industrially applicable.

## Claims

1. An indoor air cleaning system with disconnection detecting and preventing mechanism, **characterized by** comprising:
at least one gas filtration device (D) disposed in an indoor field (A) and comprising a fan (D1), a filter element (D2), a gas detector (1) and a driving control element (D3), wherein the gas detector (1) detects an air pollution, outputs air pollution information via Internet of Things (IOT) communication, and receives a control command via IOT communication and transmits the control command to the driving control element (D3) for enabling and controlling the fan (D1) to guide the air pollution to pass through the filter element (D2); and
a cloud computing server (2) receiving the air pollution information detected and outputted by the gas detector (1) via IOT communication, storing the air pollution information to form a big data database of air pollution data, performing an intelligence computing for comparison based on the big data database of air pollution data, and intelligently selecting and issuing the control command via IOT communication to the gas detector (1) of the least one gas filtration device (D) and then to the driving control element (D3) for enabling the fan (D1),
wherein when IOT communication is judged as disconnected in a handshaking process, the gas detector (1) autonomously computes and compares the air pollution information detected thereby, and issues the control command to the driving control element (D3) to enable and control the fan (D1) for guiding the air pollution to pass through the filter element (D2), thereby reaching a gas state of the indoor field (A) to a cleanroom class with a level of air pollution close to zero.

2. The indoor air cleaning system with disconnection detecting and preventing mechanism according to claim 1, wherein the air pollution is at least one selected from the group consisting of particulate matter, carbon monoxide, carbon dioxide, ozone, sulfur dioxide, nitrogen dioxide, lead, total volatile organic compounds (TVOC), formaldehyde, bacteria, fungi, virus and a combination thereof; and wherein the intelligence computing comprises an artificial intelligence (AI) computing and an edge computing.

3. The indoor air cleaning system with disconnection detecting and preventing mechanism according to claim 1, wherein the IOT communication comprises one selected from the group consisting of a wired communication, a wireless communication, and a combination thereof for being utilized by the cloud computing server (2) to communicate, wherein the cloud computing server (2) receives the air pollution information, performs an intelligence computing, and intelligently selects and issues the control command to the gas detector (1) for further transmitting to the driving control element (D3) to enable and control the fan (D1) to guide the air pollution to pass through the filter element (D2), thereby reaching the gas state of the indoor field (A) to a cleanroom class with a level of air pollution close to zero, and wherein the handshaking process judges if the wired communication and/or the wireless communication of IOT communication is disconnected, and an activation mechanism is utilized to select one of the wired communication and the wireless communication which functions normally, so that the cloud computing server (2) receives the air pollution information via the selected one of the wired communication and the wireless communication, performs an intelligence computing, and intelligently selects and issues the control command to the gas detector (1) for further transmitting to the driving control element (D3) to enable and control the fan (D1) to guide the air pollution to pass through the filter element (D2), thereby reaching the gas state of the indoor field (A) to a cleanroom class with a level of air pollution close to zero.

4. The indoor air cleaning system with disconnection detecting and preventing mechanism according to claim 1, wherein the gas filtration device (D) comprises a gas exchanging device (1D), the gas exchanging device (1D) is in communication with a gas-introducing channel (1D1) for fluid communicating with an outdoor field (B), and the gas detector (1) of the gas exchanging device (1D) receives the control command via IOT communication and transmits the control command to the driving control element (D3) for enabling and controlling the fan (D1) to introduce a gas from the outdoor field (B) into the indoor filed (A) for gas-exchanging; and wherein a plurality of gas detectors (1) are further disposed in the indoor field (A) and the outdoor field (B) for detecting the air pollution and outputting the air pollution information via IOT communication, and the cloud computing server (2) receives the air pollution information of the indoor field (A) and the outdoor field (B), stores the air pollution information to form the big data database of air pollution data, and performs the intelligence computing to compare the air pollution information of the indoor field (A) and the outdoor field (B), wherein when a value of the air pollution information of the indoor field (A) is higher than a value of the air pollution information of the outdoor field (B), the cloud computing server (2) issues the control command to the gas detector (1) via IOT communication for further transmitting to the driving control element (D3) to enable the gas exchanging device (1D), thereby introducing the gas from the outdoor field (B) into the indoor field (A) for gas-exchanging.

5. The indoor air cleaning system with disconnection detecting and preventing mechanism according to claim 4, wherein the air pollution information of the indoor field (A) and the outdoor field (B) comprises information of carbon dioxide (CO₂), and a value of carbon dioxide (CO₂) detected by the gas detector (1) is maintained to be lower than a safe air pollution value of 800 PPM, wherein when the value of carbon dioxide (CO₂) is higher than the safe air pollution value, the gas exchanging device (1D) introduces the gas from the outdoor field (B) into the indoor field (A) for gas exchanging; and wherein the gas exchanging device (1D) is a fresh air exchanging system.

6. The indoor air cleaning system with disconnection detecting and preventing mechanism according to claim 4, wherein a valve (1D2) is disposed between the gas-introducing channel (1D1) and the outdoor field (B), and the valve (1D2) is controlled by the driving control element (D3), wherein when the gas detector (1) receives the control command and transmits the control command to the driving control element (D3) to enable the gas exchanging device (1D), the valve (1D2) is simultaneously controlled to open, so that the gas-introducing channel (1D1) is in fluid communication with the outdoor field (B), and the gas is introduced from the outdoor field (B) into the indoor field (A) for gas exchanging.

7. The indoor air cleaning system with disconnection detecting and preventing mechanism according to claim 1, wherein the gas filtration device (D) comprises a circulation filtration device (2D), wherein the gas detector (1) outputs the air pollution information to the cloud computing server (2), the cloud computing server (2) receives the air pollution information, stores the air pollution information to form the big data database of air pollution data, performs the intelligence computing for comparison, and intelligently selects and issues the control command, and the gas detector (1) receives the control command via IOT communication and transmits the control command to the driving control element (D3) to enable the circulation filtration device (2D), thereby guiding the air pollution to pass through the filer element (D2) for filtration and then exhausting into the indoor field (A).

8. The indoor air cleaning system with disconnection detecting and preventing mechanism according to claim 1, wherein the gas filtration device (D) comprises an air conditioning device (3D) disposed in the indoor field (A) for adjusting temperature and humidity, wherein the gas detector (1) receives the control command via IOT communication, transmits the control command to the driving control element (D3) to enable the air conditioning device (3D), and outputs gas temperature and humidity information of the indoor field (A) to the cloud computing server (2), and the cloud computing server (2) receives and stores the gas temperature and humidity information to form the big data database of air pollution data.

9. The indoor air cleaning system with disconnection detecting and preventing mechanism according to claim 8, wherein the temperature and humidity of the indoor field (A) is controlled to maintain at temperature of 25°C±3°C and humidity of 50%±10%.

10. The indoor air cleaning system with disconnection detecting and preventing mechanism according to claim 1, wherein the gas filtration device (D) comprises a negative pressure exhaust fan (4D) disposed in a kitchen unit (A1) in the indoor field (A), and a gas-introducing channel (4D1) is disposed for fluid communicating with an outdoor field (B), wherein the gas detector (1) outputs the air pollution information to the cloud computing server (2), the cloud computing server (2) receives the air pollution information, stores the air pollution information to form the big data database of air pollution data, performs the intelligence computing for comparison, and intelligently selects and issues the control command, and the gas detector (1) receives the control command via IOT communication and transmits the control command to the driving control element (D3) to enable the negative pressure exhaust fan (4D), thereby guiding the air pollution to pass through the filer element (D2) for filtration and speeding up an exhausting of the air pollution in the indoor field (A) to the outdoor field (B).

11. The indoor air cleaning system with disconnection detecting and preventing mechanism according to claim 1, wherein the gas filtration device (D) comprises a range hood (5D) disposed in a kitchen unit (A1) in the indoor field (A), and a gas-introducing channel (5D1) is disposed for fluid communicating with an outdoor field (B), wherein the gas detector (1) outputs the air pollution information to the cloud computing server (2), the cloud computing server (2) receives the air pollution information, stores the air pollution information to form the big data database of air pollution data, performs the intelligence computing for comparison, and intelligently selects and issues the control command, and the gas detector (1) receives the control command via IOT communication and transmits the control command to the driving control element (D3) to enable the range hood (5D), thereby guiding the air pollution to pass through the filer element (D2) for filtration and speeding up an exhausting of the air pollution in the indoor field (A) to the outdoor field (B).

12. The indoor air cleaning system with disconnection detecting and preventing mechanism according to claim 1, wherein the gas filtration device (D) comprises a bathroom exhaust fan (6D) disposed in a bathroom unit (A2) in the indoor field (A), and a gas-introducing channel (6D1) is disposed for fluid communicating with an outdoor field (B), wherein the gas detector (1) outputs the air pollution information to the cloud computing server (2), the cloud computing server (2) receives the air pollution information, stores the air pollution information to form the big data database of air pollution data, performs the intelligence computing for comparison, and intelligently selects and issues the control command, and the gas detector (1) receives the control command via IOT communication and transmits the control command to the driving control element (D3) to enable the bathroom exhaust fan (6D), thereby guiding the air pollution to pass through the filer element (D2) for filtration and speeding up an exhausting of the air pollution in the indoor field (A) to the outdoor field (B), and wherein the gas detector (1) of the bathroom exhaust fan (6D) simultaneously receives the control command issued by the cloud computing server (2) via IOT communication and transmits the control command to the driving control element (D3) to enable the bathroom exhaust fan (6D) for further adjusting temperature and humidity of the indoor field (A).

13. The indoor air cleaning system with disconnection detecting and preventing mechanism according to claim 12, wherein the temperature and humidity of the indoor field (A) is controlled to maintain at temperature of 25°C±3°C and humidity of 50%±10%.

14. The indoor air cleaning system with disconnection detecting and preventing mechanism according to claim 1, wherein the gas detector (1) comprises a controlling circuit board (11), a gas detection main part (12), a microprocessor (13) and a communicator (14), wherein the controlling circuit board (11) is electrically connected to the driving control element (D3), the gas detection main part (12), the microprocessor (13) and the communicator (14) are integrally packaged on the controlling circuit board (11) and electrically connected to the controlling circuit board (11), the microprocessor (13) controls a detection operation of the gas detection main part (12) for detecting the air pollution, and the microprocessor (13) processes and provides the air pollution information to the communicator (14) for external communication transmission; and wherein the filter element (D2) comprises one selected from the group consisting of an ultra low penetration air (ULPA) filter screen, a high efficiency particulate air (HEPA) filter screen, and a combination thereof.

15. The indoor air cleaning system with disconnection detecting and preventing mechanism according to claim 1, wherein the cloud computing server (2) comprises a wireless network cloud computing service module (21), a cloud control service unit (22), a device management unit (23) and an application program unit (24), wherein the cloud computing server (2) intelligently computes a cleanliness specification of real time number of suspended particles in the indoor field (A) and intelligently selects and issues the control command to the at least one gas filtration device (D) for timely enabling the fan (D1) of the gas filtration device (D), so that an air volume and a start-up period of the fan (D1) is adjusted based on the cleanliness specification of real time number of suspended particles to improve a cleaning efficiency of the indoor field (A), reduce an environment noise of the indoor field (A), and generate an internal directional circulation airflow in the indoor field (A) to guide the air pollution to pass through the filter element (D2) multiple times for filtration, thereby reaching the gas state of the indoor field (A) to a cleanroom class with a level of air pollution close to zero.
